# EUROPEAN PATENT APPLICATION

(11) **EP 1 085 229 A1**
(43) Date of publication of application: **21.03.2001**
(21) Application number: 99830588.2
(22) Date of filing: 17.09.1999
(51) Int. Cl.: F16D 55/32

(54) **Disc brake**

(71) Applicant: Brembo Engineering S.p.A., 24035 Curno, (Bergamo) (IT)
(72) Inventor: Boden, Adrian, Brembo Engineering S.p.A., 24035 Curno-Bergamo (IT); Pacchiana, Giovanni Paolo, Brembo Eng. S.p.A., 24035 Curno-Bergamo (IT); Tironi, Giovanni Mario, Brembo Eng. S.p.A., 24035 Curno-Bergamo (IT)
(74) Representative: Perani, Aurelio

(57) **Abstract**

A disc brake (1), which is sturdy and reliable, for braking a wheel (2) keyed onto a hub (3) rotating in a journal (7) of a motor vehicle, comprises a disc (13), having a braking ring (15) axially displaceable along a bell member (14) integral with the hub (3), and a caliper (18) acting on the braking ring (15) by means of pads (19a, 19b, 20a, 20b) subject to hydraulic means (24), the caliper (18) comprising a thrusting group (25), fitted with hydraulic means (24), located on one side of the disc (13), and a reaction counter-piece (26) located on the other side of the disc (13) and integral with the journal (7).

## Description

The present invention relates to a disc brake, for braking a wheel keyed onto a hub rotating in a journal of a motor vehicle, of the type comprising a disc having a braking ring axially displaceable along a bell member integral with the hub, and a caliper acting on the braking ring by means of pads subject to hydraulic means.

These disc brakes may be applied to motorcycles, motor vehicles and industrial vehicles, and in particular to high-performance motorcycles, motor vehicles and industrial vehicles. Constant attempts are being made to make these brakes sturdier and more reliable.

The problem underlying the present invention is that of devising a disc brake of the type specified, which achieves an unusual level of both sturdiness and reliability.

This problem is solved by a disc brake of the type specified, which is characterized in that the caliper comprises a thrusting group, fitted with the hydraulic means, located on one side of the disc and a reaction counter-piece located on the other side of the disc and integral with the journal.

Further characteristic features and advantages of the disc brake according to the present invention will emerge from the following description of a preferred embodiment thereof, provided by way of a non-limiting example of embodiment, with reference to the accompanying figures, in which:
- Figure 1 shows a schematic perspective view, with parts exploded, of a disc brake according to the invention,
- Figure 2 shows a schematic elevation view, longitudinally sectioned along the line II-II, of the disc brake according to Figure 1,
- Figure 3 shows a schematic elevation view, cross-sectioned along the line III-III, of the disc brake according to Figure 1,
- Figure 4 shows a schematic elevation view, cross-sectioned along the line IV-IV, of the disc brake according to Figure 1,
- Figures 5, 6 and 7 show schematic elevation views, cross-sectioned, of three variations of embodiment of the disc brake according to the invention.

With reference to the accompanying figures, 1 denotes in its entirety a disc brake for braking a wheel 2 of a motorcycle, a motor vehicle and an industrial vehicle in general, and a high-performance motor vehicle, in the example.

The wheel 2, which has an axis X-X, is keyed onto a hub 3 of the motor vehicle. More precisely, the hub 3 comprises an end portion 4, onto which the wheel 2 is keyed, a central portion 5 and an opposing end portion 6, which is rotatable in a journal 7 of the motor vehicle.

The wheel 2 comprises a sleeve 8, which is keyed onto the portion 4 of the hub, a rim 9, and a set of spokes, denoted by 10, which join together the sleeve 8 and the rim 9.

It should be noted that the rim 9 with a predefined overall width is divided into a rim portion 11, of limited width, which extends towards the outside with respect to the set of spokes, and a rim portion 12, of greater width, which extends inwards with respect to the set of spokes.

The disc brake 1 also comprises a disc 13 which has a bell member 14 and a braking ring 15. The bell member 14 is integral with the central portion 5 of the hub 3. The ring 15 is axially displaceable, in the direction of the axis X-X, along the bell member 14, and is locked in rotation with the bell member 14 by means of the presence of grooved joint 16 formed between a bell member 14 and the ring 15.

An annular space 17 axially extending in the direction X-X and radially extending by a limited predefined amount is formed between the sleeve 8, the bell member 14 and the journal 7, on the one hand, and the rim portion 12.

This space 17 receives a caliper 12 which extends astride the braking ring 15 and acts on the braking ring 15 by means of a pair of pads 19a and 19b, located on one side of the braking ring 15 and in particular located on the outer side of the braking ring, and by means of a pair of pads 20a and 20b, located on the other side of the braking ring 15 and in particular on the inner side of the braking ring, in the region of the journal.

It should be noted that the caliper 12 is formed by two half-calipers 21 and 22, joined together by means of tie-rods 23.

The half-caliper 21 is located on the outer side of the braking ring 15 and is fitted with hydraulic means 24 which act directly on the pads 19a and 19b and indirectly on the pads 20a and 20b. This half-caliper 21 forms a thrusting group 25, which is suitably supplied with brake fluid under pressure, directed towards the hydraulic means 24.

The half-caliper 22 is located on the other side of the braking ring 15 and is integral with the journal 7. The half-caliper 22 forms a reaction counter-piece 26 onto which the action of the hydraulic means 24 is transmitted. It should be noted that a very small spatial relationship, essentially limited to the thickness of the pad, exists between the reaction counter-piece integral with the journal 7 and the braking ring 15, in the direction X-X.

Preferably, the reaction counter-piece 26 and the journal 7 form a single piece made of material with a high mechanical strength and low specific weight, for example a titanium alloy.

In the example the disc brake 1 comprises an additional half-caliper 27 which is basically identical to the caliper 18 and is located in a position diametrically opposite to the said caliper 18.

The hydraulic means 24 of the thrusting group 25 of the caliper 18, as well as those of the caliper 27, comprise four identical pistons 28, with a predefined diameter D, all of which have their respective axes arranged on a circumference of predefined radius R, at a regular angular spacing. It should be noted that the thrusting group 25 has small radial dimensions, basically slightly greater than the diameter D of the pistons, which basically occupy most of the radial dimension of the space 17.

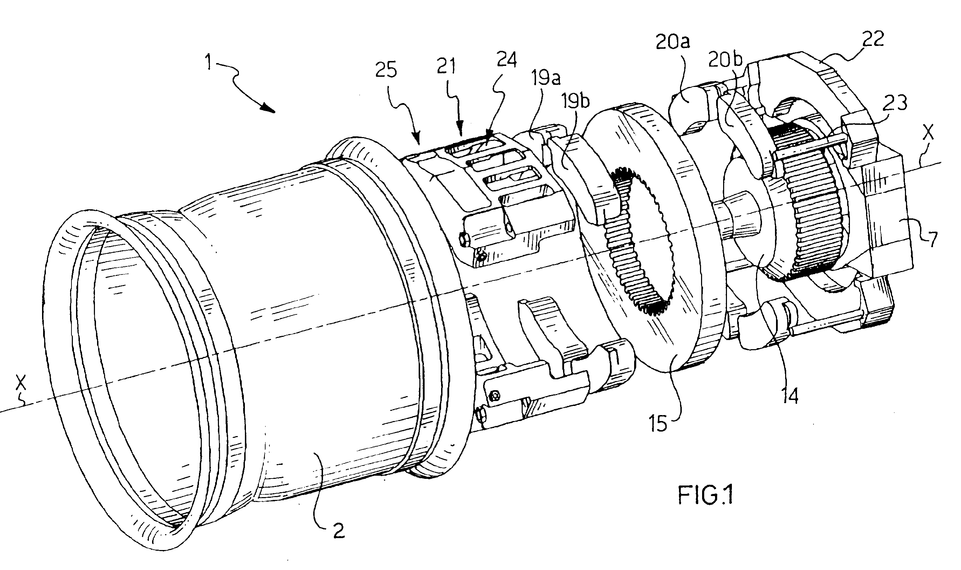

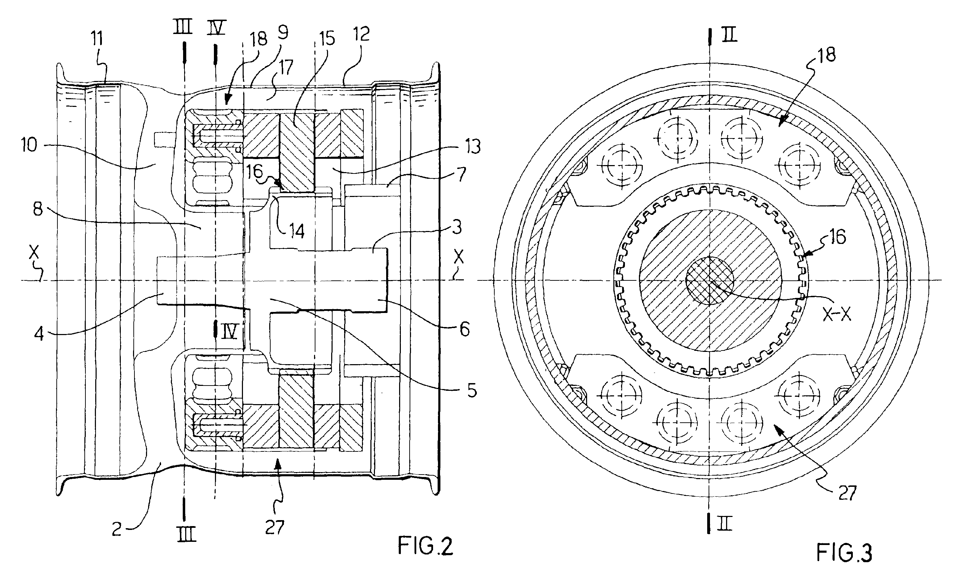

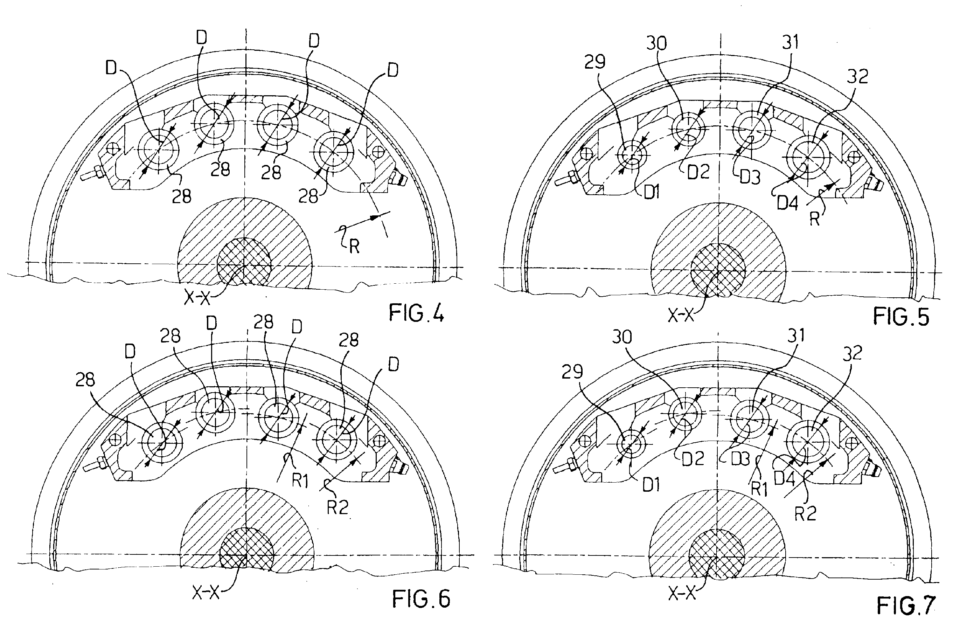

With reference to Figures 5, 6 and 7, respective variations of embodiment of the disc brake according to the present invention are described. In Figures 5, 6 and 7, parts which are structurally and functionally equivalent to those of Figures 1 to 4 retain the same reference numbers and are therefore not described further.

With reference to the variation according to Figure 5, the hydraulic means 24 comprise four pistons 29, 30, 31 and 32 which all have their respective axes arranged on a circumference of radius R. The four pistons 29 to 32 have diameters D1, D2, D3, D4 which are different from each other, i.e. diameters increasing from a minimum diameter D1, of the piston 29, to a maximum diameter D4, of the piston 32, with the direction of the increase directed in the same direction in which the braking ring 15 passes tangentially inside the caliper 18 between the opposing pads.

This produces an intensification of the force acting on the pads where the wear tends to be less marked and therefore a more uniform wear of the said pads.

With reference to the variation according to Figure 6, the hydraulic means 24 comprise four pistons 28, all with the same diameter D. The four pistons 33 have their respective axes arranged substantially in quinquncial, i.e. staggered, fashion, i.e. arranged alternately on two circumferences, one of larger radius R1 and one of smaller radius R2.

This results in a distribution of the force exerted by the hydraulic means over a broader radial band and therefore in greater stability of the pads.

With reference to the variation according to Figure 7, the hydraulic means 24 comprise four pistons 29-32, with increasing diameters D1-D4 and alternately arranged staggered on two circumferences of radius R1 and R2.

This results in uniform wear and stability of the pads.

The main advantage of the disc brake according to the present invention lies in the unusual level of sturdiness and reliability which are achieved owing to the fact that the disc and the reaction counter-piece are situated, in accordance with the invention, at a short distance from the journal.

A further advantage of the disc brake according to the present invention lies in the fact that the brake fluid of the hydraulic means remains at an unusually lower temperature, owing to the fact that the thrusting group is situated in the immediate vicinity of the set of spokes and is struck by the air flow generated by the latter.

A further advantage of the disc brake according to the present invention lies in the practicality of handling when the pads are replaced and the disc changed, said practical handling being achieved owing to the fact that said parts are disassembled and assembled axially in the direction X-X, during assembly and disassembly of the wheel in the same direction.

Obviously the disc brake as described and illustrated may be subject to numerous modifications and variations by a person skilled in the art, for the purpose of satisfying contingent specific requirements, all of which, however, are contained within the scope of protection of the invention, as defined by the following claims.

## Claims

1. Disc brake (1), for braking a wheel (2) keyed onto a hub (3) rotating in a journal (7) of a motor vehicle, of the type comprising a disc (13) having a braking ring (15) axially displaceable along a bell member (14) integral with the hub (3), and a caliper (18) acting on the braking ring (15) by means of pads (19a, 19b, 20a, 20b) subject to hydraulic means (24), characterized in that the caliper (18) comprises a thrusting group (25), fitted with hydraulic means (24), located on one side of the disc (13) and a reaction counter-piece (26) located on the other side of the disc (13) and integral with the journal (7).

2. Disc brake (1) according to Claim 1, characterized in that the hydraulic means (24) comprise a plurality of pistons (28 - 33).

3. Disc brake (1) according to Claim 2, characterized in that the pistons are four in number.

4. Disc brake (1) according to Claim 2, characterized in that the pistons (29, 30, 31, 32) have a diameter increasing from a minimum diameter (D1) to a maximum diameter (D4).

5. Disc brake (1) according to Claim 2, characterized in that the pistons (29-33) are arranged on circumferences with different radii (R1, R2).

6. Disc brake (1) according to Claim 1, characterized in that the thrusting group (25) has small radial dimensions slightly greater than the diameter of the pistons.

7. Disc brake (1) according to Claim 1, characterized in that the reaction counter-piece (26) is made of a material which has a high mechanical strength and low specific weight.

8. Disc brake (1) according to Claim 7, characterized in that the reaction counter-piece (26) and the journal (7) form one piece.

9. Disc brake (1) according to Claim 1, characterized in that it comprises an additional caliper (27) acting on the braking ring (15) in a diametrically opposite position to the first caliper (18).

10. Brake disc (1) according to Claim 9, characterized in that each caliper (18, 27) supports two pads (19a, 19b; 20a, 20b) on either side of the disc (13).

11. Caliper (18, 27) of a disc brake (1) for braking a wheel (2) keyed onto a hub (3) rotating in a journal (7) of a motor vehicle, acting on a braking ring (15) axially displaceable with respect to the hub (3), by means of pads (19a, 19b, 20a, 20b) subject to hydraulic means (24), characterized in that it comprises a thrusting group (25), fitted with hydraulic means (24), located on one side of the disc (13) and a reaction counter-piece (26) located on the other side of the disc (13) and integral with the journal (7).
